# EUROPÄISCHE PATENTSCHRIFT

(11) **EP 2 323 523 B1**
(45) Veröffentlichungstag und Bekanntmachung des Hinweises auf die Patenterteilung: **10.10.2012**
(21) Anmeldenummer: 09782253.0
(22) Anmeldetag: 27.08.2009
(51) Int. Cl.: A47J 31/44

(54) **HALTEEINRICHTUNG**
HOLDER DEVICE
DISPOSITIF DE MAINTIEN

(30) Priorität: 17.09.2008 DE 102008042178
(43) Veröffentlichungstag der Anmeldung: 25.05.2011
(73) Patentinhaber: BSH Bosch und Siemens Hausgeräte GmbH, 81739 München (DE)
(72) Erfinder: LUIPPOLD, Gregor, 80639 München (DE)
(86) Internationale Anmeldenummer: PCT/EP2009/061039
(87) Internationale Veröffentlichungsnummer: WO 2010/031665

(56) Entgegenhaltungen:
- EP-A1- 1 949 827
- DE-A1-102005 057 152
- US-A1- 2006 090 653

## Beschreibung

Die vorliegende Erfindung betrifft eine I-lalteeinrichtung in einem Getränkeautomaten. Die Erfindung betrifft außerdem einen Getränke- bzw. Kaffeeautomaten mit einer derartigen abnehmbaren Halteeinrichtung.

Durch ein ansprechendes Design von Getränkeautomaten und insbesondere von modernen Kaffeemaschinen, sowie ein sich in letzter Zeit deutlich verbreitertes Angebotsspektrum von durch diese Getränkeautomaten zu erzeugenden Getränken, werden diese vermehrt gekauft und aufgestellt. Neben der eigentlichen Funktion steht dabei auch immer mehr das Design, das heißt ein ästhetischer Gesamteindruck, des Getränkeautomatens bzw. der Kaffeemaschine im Vordergrund der Kaufentscheidung. Aus diesem Grund wird es für Hersteller derartiger Getränkeautomaten bzw. Kaffeemaschinen zunehmend wichtiger, designerische Schwerpunkte zu setzen, mit welchen sich insbesondere bestimmte Linien, Serien oder auch eine Zugehörigkeit zu einer bestimmten Marke visuell darstellen lassen.

Moderne Kaffeemaschinen sind darüber hinaus in der Lage unterschiedlichste Getränke, insbesondere Kaffeemischgetränke, wie beispielsweise Cappuccino oder Latte Macchiato, zu erzeugen und in entsprechende Getränkegefäße abzufüllen. Hierbei ist klar, dass aufgrund der unterschiedlichen Kaffeevarianten, beispielsweise Espresso oder Latte Macchiato, auch unterschiedlich große Getränkegefäße bzw. Tassen zum Einsatz kommen. So wird ein Latte Macchiato üblicherweise in einem Glas serviert, während ein Espresso aufgrund der geringen Menge in einer kleinen Tasse angeboten wird. Dabei ist es bei modernen Kaffeemaschinen möglich, einen Kaffeeauslass in der Höhe zu verstellen und dadurch an unterschiedlich große Getränkegefäße bzw. Tassen anzupassen, um beispielsweise ein Befüllen einer kleinen Espressotasse aus großer Höhe und die damit verbundenen Kaffeespritzer, zu vermeiden.

So offenbart beispielsweise die US 2006/090653 A1 eine Halteeinrichtung mit einer Aufnahmeeinrichtung und einer dazu komplementär ausgebildeten Abstützelnrichtung wobei die Abstützeinrichtung in verschiedenen Höhenstellungen arretierbar ist.

Trotz aller Sorgfalt, lassen sich hierbei jedoch nicht sämtliche Verunreinigungen im Abfüllbereich der Kaffeemaschine bzw. des Getränkeautomatens zuverlässig vermeiden, so dass dieser üblicherweise von Zeit zu Zeit aufwendig händisch gereinigt werden muss.

Die vorliegende Erfindung beschäftigt sich mit dem Problem, eine Halteeinrichtung zum Halten eines Getränkegefäßes in einem Getränkeautomaten, insbesondere in einer Kaffeemaschine, anzugeben, welche einerseits durch eine entsprechende Ausgestaltung beim Gebrauch weniger stark zu Verunreinigungen neigt und sich andererseits bei auftretenden Verunreinigungen besonders einfach reinigen lässt.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, eine Halteeinrichtung zum Halten eines Getränkegefäßes in einem Getränkeautomaten, beispielsweise zum Halten einer Kaffeetasse in einer Kaffeemaschine, mit einer Aufnahmeeinrichtung und einer dazu komplementär ausgebildeten Abstützeinrichtung auszustatten, wobei auf der Abstützeinrichtung das Getränkegefäß, respektive die Tasse, abstellbar ist und wobei die Abstützeinrichtung in derAufnahmeeinrichtung höhenverstellbar ist. Die Aufnahmeeinrichtung ist dabei erfindungsgemäß Im Wesentlichen aufrecht stehend und halbkokonartig ausgebildet, wobei die Abstützeinrichtung randseitig von der Aufnahmeeinrichtung umgriffen wird. Durch die Tatsache, dass die Abstützeinrichtung innerhalb der Aufnahmeeinrichtung in zumindest zwei unterschiedlichen Höhenstellungen arretierbar ist, können sowohl kleine Getränkegefäße, wie beispielsweise eine Espressotasse, als auch große Getränkegefäße, wie beispielsweise ein Latte Macchiato-Glas, höhengerecht unter einer Getränkeausgabe des Getränkeautomatens bzw. der Kaffeemaschine positioniert werden, ohne dass dabei befürchtet werden muss, dass durch einen zu großen Abstand zwischen dem Getränkegefäß und der Getränkeausgabe beim Befüllen des Getränkegefäß ein ungewolltes Spritzen und damit Verschmutzen der Halteeinrichtung erfolgt. Die Halteeinrichtung ist somit leicht an unterschiedlich große Getränkegefäße anpassbar und unterliegt dadurch bereits einer deutlich reduzierten Verschmutzungsgefahr. Gleichzeitig ist die Halteeinrichtung als zum Getränkeautomaten bzw. zur Kaffeemaschine separates Teil ausgebildet, welches lediglich beim Gebrauch im bzw. am Getränkeautomaten befestigt wird und zu Reinigungszwecken von diesem abgenommen werden kann. Eine derartige abnehmbare Halteeinrichtung kann beispielsweise leicht händisch oder in einer Spülmaschine gereinigt werden, wodurch die bisher übliche aufwändige und händische Reinigung der Halteeinrichtung am Getränkeautomaten entfallen kann. Mittels der erfindungsgemäßen Halteeinrichtung kann so zum einen die Verschmutzungsgefahr derselben deutlich reduziert und bei einer dennoch aufgetretenen Verschmutzung diese deutlich einfacher gereinigt werden.

Erfindungsgemäß weist die Abstützeinrichtung eine zumindest bereichsweise flüssigkeitsdurchlässige Stellfläche sowie eine darunter angeordnete Auffangvorrichtung auf. Die zumindest bereichsweise flüssigkeitsdurchlässige Stellfläche, welche beispielsweise in der Art eines Rosts ausgebildet ist, ermöglicht so einen Abfluss von einem fehlgeleiteten Getränkeanteil, beispielsweise beim Überlaufen des Getränkegefäßes während des Befüllvorgangs, wobei der übergelaufene Getränkeanteil zuverlässig und hygienisch in der darunter angeordneten Auffangvorrichtung aufgefangen werden kann. Durch eine Abnahme der Abstützeinrichtung mit der Auffangvorrichtung aus der Aufnahmeeinrichtung, kann die Auffangvorrichtung einfach entleert und wieder gereinigt werden.

Erfindunsgemäβ ist an der Stellfläche oder an der Auffangvorrichtung eine Haltekonsole angeordnet ist, welche alternativ in zumindest zwei von einander beabstandete und an der Aufnahmeeinrichtung vorgesehene Öffnungen einsteckbar ist.

Bei einer weiteren vorteilhaften Ausführungsform der erfindungsgemäßen Lösung, ist an der Stellfläche oder an der Auffangvorrichtung ein Haltekonsole angeordnet, die in der Art eines Schirmmützenschildes ausgebildet ist und zudem eine konische Form aufweist, so dass sich die Abstützeinrichtung beim Einstecken der Haltekonsole in die an der Aufnahmeeinrichtung vorgesehene Durchgangsöffnung selbst ausrichtet. Die besondere Form der Haltekonsole ermöglicht dadurch nicht nur ein selbst findendes und leichtes Einstecken der Abstützeinrichtung in die Aufnahmeeinrichtung und dadurch ein besonders leichtes Verstellen der Höhe der Abstützeinrichtung, sondern sie ermöglicht zudem beim Einführvorgang der Haltekonsole in die zugehörige Durchgangsöffnung ein selbständiges horizontales Ausrichten der Abstützeinrichtung und dadurch die Gewährleistung einer horizontalen Stellfläche, auf welcher das Getränkegefäß, respektive die Kaffeetasse, sicher steht. Die in der Art eines Schirmmützenschildes ausgebildete Haltekonsole kann dabei an die Abstützeinrichtung, beispielsweise an die Stellfläche oder an die Auffangvorrichtung, angespritzt sein und ist dadurch äußerst kostengünstig herstellbar.

Vorzugsweise ist dabei die Haltekonsole an die Auffangvorrichtung angespritzt, wobei sowohl die Haltekonsole als auch die Auffangvorrichtung vorzugsweise als Kunststoffspritzgussteil ausgebildet sind. Die Stellfläche hingegen kann beispielsweise aus ästhetischen Gesichtspunkten aus Metall, selbstverständlich aber auch aus Kunststoff ausgebildet sein.

Zweckmäßig ist an der Aufnahmeeinrichtung zumindest eine Arretiereinrichtung, beispielsweise ein Clipselement, vorgesehen, über welches die Aufnahmeeinrichtung und damit die gesamte Halteeinrichtung am bzw. im Getränkeautomaten bzw. an der Kaffeemaschine, arretierbar ist. Eine derartige Arretiereinrichtung ist dabei vorzugsweise als einfach zu bedienende und schnell zu lösende bzw. zu fixierende Arretiereinrichtung ausgebildet, beispielsweise mittels oben genannter Clipselemente, so dass ein Anbau der Halteeinrichtung an den Getränkeautomaten sowie ein Abbau der Halteeinrichtung vom Getränkeautomaten, beispielsweise zu Reinigungszwecken, mit wenigen Handgriffen und dadurch äußerst einfach möglich ist. Selbstverständlich ist dabei auch ein Zusammenwirken von einem oder mehreren Clipselementen mit weiteren Steckeinrichtungen oder Hinterschnitten denkbar. Durch den äußerst einfachen An- bzw. Abbauvorgang der Halteeinrichtung am bzw. vom Getränkeautomaten, kann diese zu Reinigungszwecken leicht entnommen werden und ermöglicht darüber hinaus eine große Variantenvielfalt, da unterschiedlichste Halteeinrichtungen, beispielsweise hinsichtlich ihrer Gestalt und Farbgebung, einfach an dem entsprechenden Getränkeautomaten bzw. an der entsprechenden Kaffeemaschine befestigt bzw. von diesem/dieser wieder gelöst werden können. Dabei ist insbesondere denkbar, dass der Getränkeautomat bzw. die Kaffeemaschine als Standardgerät vertrieben wird, während die Halteeinrichtung in unterschiedlichsten Farbgestaltungen sowohl im Zubehörhandel als auch frei wählbar zusammen mit dem Getränkeautomaten vertrieben werden kann. Insbesondere lässt sich durch eine dadurch erreichte Variantenvielfalt die Zugehörigkeit zu einer bestimmten Marke bzw. zu einer bestimmten Serie einer bestimmten Marke auf besonders einfache visuelle Weise darstellen. Von besonderem Vorteil dürfte darüber hinaus sein, dass mit unterschiedlichsten Farbvarianten der Halteeinrichtungen auf individuelle Kundenwünsche eingegangen werden kann, so dass neben der reinen Funktionalität der Kunde auch durch ein ihn individuell überzeugendes Design angesprochen werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch
- Fig. 1: eine Ansicht auf eine Kaffeemaschine mit einer eingesetzten erfindungsgemäßen Halteeinrichtung,
- Fig. 2: die in Fig. 1 dargestellte Kaffeemaschine, jedoch mit separat dazu dargestellter Halteeinrichtung,
- Fig. 3: eine Ansicht auf die Halteeinrichtung mit der Abstützeinrichtung und der Aufnahmeeinrichtung,
- Fig. 4: einen Einführvorgang der Abstützeinrichtung in die Aufnahmeeinrichtung.

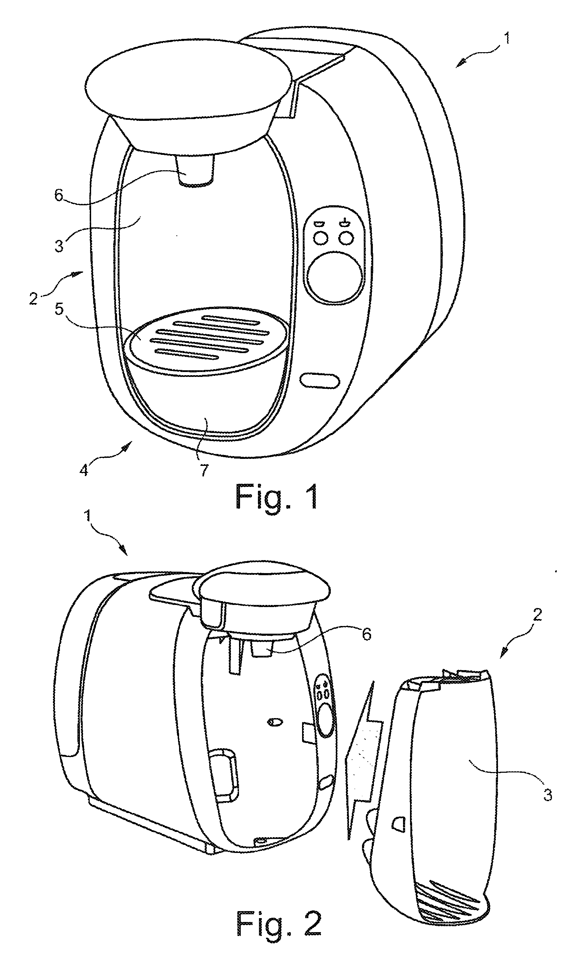

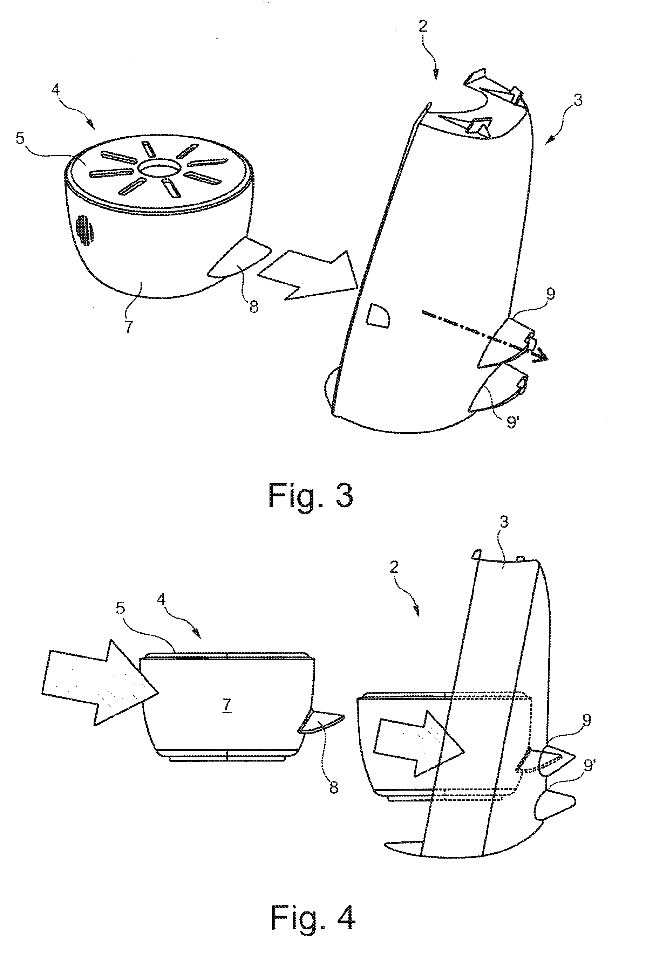

Entsprechend der Fig. 1, weist eine Kaffeemaschine 1, welche allgemein auch als Getränkeautomat ausgebildet sein kann, eine Halteeinrichtung 2 zum Halten eines nicht dargestellten Getränkegefäßes im Getränkeautomaten bzw. in der Kaffeemaschine 1 auf. Die Halteeinrichtung 2 ist zur besseren Veranschaulichung dabei gemäß der Fig. 3 in ihre Komponenten zerlegt dargestellt, wobei die Halteeinrichtung 2 eine im Wesentlichen aufrecht stehende, halbkonkonartig ausgebildete Aufnahmeeinrichtung 3 sowie eine komplementär dazu ausgebildete Abstützeinrichtung 4 umfasst. Um ein verschmutzungsfreies Befüllen unterschiedlich großer Getränkegefäße, wie beispielsweise einer Espressotasse oder eines Latte Macchiato-Glases, gewährleisten zu können, ist die Abstützeinrichtung 4 in der Aufnahmeeinrichtung 3 in zumindest zwei unterschiedlichen Höhenstellungen arretierbar. Ein Abstellen des Getränkegefäßes erfolgt dabei üblicherweise auf einer Stellfläche 5 der Abstützeinrichtung 4. Soll demgemäß beispielsweise eine Espressotasse mit Espresso befüllt werden, so wird die Abstützeinrichtung 4 in einer höher gelegenen Position in der Aufnahmeeinrichtung 3 arretiert, als dies beispielsweise beim Befüllen eines Latte Macchiato-Glases der Fall ist. Mittels der höhenverstellbaren Abstützeinrichtung 4, können somit unterschiedlich große Getränkegefäße einfach befüllt werden, ohne dass dabei befürchtet werden muss, dass es durch einen zu großen Abstand zwischen einem Getränkeauslauf 6 und dem Getränkegefäß zu einem Verspritzen der Halteeinrichtung 2 kommt.

Von weiterer entscheidender Bedeutung der erfindungsgemäßen Lösung ist, dass die Halteeinrichtung 2 als separates Teil ausgebildet ist, welches bei Bedarf, das heißt bei Benutzung des Getränkeautomatens 1, in bzw. an diesem befestigt wird. Dadurch ist es einerseits möglich, die Halteeinrichtung 2 zu Reinigungszwecken leicht zu entnehmen und beispielsweise in einer Spülmaschine zu reinigen, und andererseits unterschiedlichste Ausgestaltungen der Halteeinrichtung 2 anzubieten, mit welchen beispielsweise unterschiedliche Linien bzw. Serien einer Marke oder aber auch die Zugehörigkeit zu einer Marke designerisch unterstrichen werden können. Selbstverständlich sind dabei in einem durch die Halteeinrichtung 2 freigegebenen Raum bei deren Ausbau keine sicherheitsrelevanten Einrichtungen, wie beispielsweise elektrische Kabel, frei zugänglich.

Betrachtet man die Abstützeinrichtung 4, so fällt auf, dass diese aus der zumindest bereichsweise flüssigkeitsdurchlässigen Stellfläche 5 sowie einer darunter angeordneten Auffangvorrichtung 7 zusammengesetzt ist. Mittels der zumindest bereichsweise flüssigkeitsdurchlässigen Stellfläche 5 und der darunter positionierten Auffangvorrichtung 7 kann beispielsweise übergelaufene Flüssigkeit sicher und zuverlässig aufgefangen und bis zu einer Entsorgung aufbewahrt werden.

Zur Arretierung der Abstützeinrichtung 4 in der Aufnahmeeinrichtung 3, ist an der Auffangvorrichtung 7 eine Haltekonsole 8 angeordnet, welche alternativ in zumindest zwei voneinander beabstandete und an der Aufnahmeeinrichtung 3 vorgesehene Öffnungen 9 und 9' einsteckbar ist. Selbstverständlich können dabei die Öffnungen 9 und 9' auch als komplementär zur Haltekonsole 8 ausgebildete Taschen ausgebildet sein. Eine Innenkontur der wenigstens zwei Öffnungen 9 und 9' bzw. derartig ausgebildeter Taschen, sind dabei üblicherweise komplementär zu einer Außenkontur der Haltekonsole 8 ausgebildet, so dass diese vorzugsweise formschlüssig in die Öffnungen 9 und 9' bzw. die Taschen eingeführt werden kann. Erfindungsgemäß ist dabei die Haltekonsole 8 in der Art eines Schirmmützenschildes ausgebildet und weist eine konische Form auf, so dass sich die Abstützeinrichtung 4 beim Einstecken der Haltekonsole 8 in die zugehörige Durchgangsöffnung 9 bzw. in die zugehörige Tasche selbst, insbesondere in horizontaler Richtung, ausrichtet und nivelliert. Hierdurch kann eine stets waagerechte Stellfläche 5 gewährleistet werden, auf welcher das Getränkegefäß sicher abgestellt werden kann.

Zum Arretieren Aufnahmeeinrichtung 3 in der Kaffeemaschine 1 und damit zu einem Arretieren der Halteeinrichtung 2 in der Kaffeemaschine 1, ist an der Aufnahmeeinrichtung 3 zumindest eine Arretiereinrichtung, beispielsweise ein Clipselement, vorgesehen, welches alleine oder zusammen mit weiteren nicht gezeigten Arretier- und Steckverbindungen, ein zuverlässiges Fixieren der Halteeinrichtung 2 an der Kaffeemaschine 1 sowie ein leichtes Einsetzen bzw. Lösen derselben gewährleistet. Prinzipiell können dabei sowohl die Aufnahmeeinrichtung 3 als auch die Abstützeinrichtung 4 aus Metall oder aus Kunststoff ausgebildet sein, wobei die einzelnen Komponenten 3, 4, 5 und 7 der Halteeinrichtung 2 spülmaschinenfest ausgebildet sind, so dass eine Reinigung der Halteeinrichtung 2 nicht unbedingt händisch erfolgen muss, sondern auf einfache Weise in einer herkömmlichen Spülmaschine.

Durch die leichte Lösbarkeit der Halteeinrichtung 2 von der Kaffeemaschine 1 bzw. dem zugehörigen Getränkeautomaten, ist nicht nur eine besonders einfache Reinigung derselben möglich, sondern zudem auch eine individuelle, insbesondere farbliche und designerische Ausgestaltung der Halteeinrichtung 2, wodurch auch auf spezielle und individuelle Kundenwünsche flexibel reagiert werden kann. Darüber hinaus ist durch eine entsprechend designerisch gestaltete Halteeinrichtung auch die Zugehörigkeit zu einer Marke bzw. zu einer bestimmten Serie dieser Marke optisch leicht darzustellen. Durch die höhenverstellbare Abstützeinrichtung 4 kann darüber hinaus eine unerwünschte frühzeitige Verschmutzung der Halteeinrichtung, und zwar insbesondere einer Innenwandung der Aufnahmeeinrichtung 3 zuverlässig vermieden werden.

### Bezugszeichenliste

- 1: Getränkeautomat/Kaffeemaschine
- 2: Halteeinrichtung
- 3: Aufnahmeeinrichtung
- 4: Abstützeinrichtung
- 5: Stellfläche
- 6: Getränkeauslauf
- 7: Auffangvorrichtung
- 8: Haltekonsole
- 9: Öffnung/Tasche

## Patentansprüche

1. Halteeinrichtung (2) zum Halten eines Getränkegefäßes in einem Getränkeautomaten, Insbesondere In einer Kaffeemaschine (1), mit einer im wesentlichen aufrecht stehenden, halbkokonartig ausgebildeten Aufnahmeeinrichtung (3) und einer dazu komplementär ausgebildeten, eine zumindest bereichsweise flüssigkeitsdurchlässige Stellfläche (5) und eine darunter angeordnete Auffangvorrichtung (7) aufweisende Abstützeinrichtung (4), auf welcher das Getränkegefäß abstellbar ist, wobei die Abstützeinrichtung (4) in der Aufnahmeeinrichtung (3) in zumindest zwei verschiedenen Höhenstellungen arretierbar ist, **dadurch gekennzeichnet, dass** an der Stellfläche (5) oder an der Auffangvorrichtung (7) eine Haltekonsole (8) angeordnet ist, welche alternativ in zumindest zwei von einander beabstandete und an der Aufnahmeeinrichtung (3) vorgesehene Öffnungen (9, 9') einsteckbar ist.

2. Halteeinrichtung nach Anspruch 1, **dadurch gekennzeichnet, dass** eine Innenkontur der wenigstens zwei Öffnungen (9, 9') in der Aufnahmeeinrichtung (3) komplementär zu einer Außenkontur der Haltekonsole (8) ausgebildet sind.

3. Halteeinrichtung nach Anspruch 1 oder 2, **dadurch gekennzeichnet, dass** die Haltekonsole (8) in der Art eines Schirmmützenschildes ausgebildet ist und zudem eine konische Form aufweist, so dass sich die Abstützeinrichtung (4) beim Einstecken der Haltekonsole (8) in die zugehörige Durchgangsöffnung (9,9') selbst ausrichtet.

4. Halteeinrichtung nach einem der Ansprüche 1 bis 3, **dadurch gekennzeichnet, dass** an der Aufnahmeeinrichtung (3) zumindest eine Arretiereinrichtung, beispielsweise ein Clipselement, vorgesehen ist, über welches die Aufnahmeeinrichtung (3) und damit die Halteeinrichtung (2) im Getränkeautomaten arretierbar ist.

5. Halteeinrichtung nach einem der Ansprüche 1 bis 4, **dadurch gekennzeichnet, dass** die Aufnahmeeinrichtung (3) und/oder die Abstützeinrichtung (4) aus Metall und/oder aus Kunststoff ausgebildet sind/ist.

6. Halteeinrichtung nach einem der Ansprüche 1 bis 5, **dadurch gekennzeichnet, dass** die Auffangvorrichtung (7) eine Tassenform aufweist.

7. Halteeinrichtung nach einem der Ansprüche 1 bis 6, **dadurch gekennzeichnet, dass** die Halteeinrichtung (2) spülmaschinenfest ausgebildet ist.

8. Kaffeemaschine (1) oder Getränkeautomat mit einer abnehmbaren Halteeinrichtung (2) nach einem der Ansprüche 1 bis 7, wobei die Kaffeemaschine/ der Getränkeautomat eine komplementär zur Halteeinrichtung (2) ausgebildete Ausnehmung aufweist, in welche alternativ unterschiedliche Halteeinrichtungen (2) einsetzbar sind.

## Claims

1. Holding device (2) for holding a beverage vessel in a drinks machine, particularly in a coffee machine (1), with a substantially upright receiving device (3) of semi-cocoon-shaped form and a support device (4), which is formed to be complementary thereto and comprises a support surface (5) liquid-permeable at least in a region and a catch device (7) arranged thereunder and on which the beverage vessel can be set down, wherein the support device (4) is lockable in the receiving device (3) in at least two different height settings, **characterised in that** a mounting bracket (8) is arranged at the support surface (5) or at the catch device (7) and is alternatively insertable into at least two mutually spaced-apart openings (9, 9') provided at the receiving device (3).

2. Holding device according to claim 1, **characterised in that** an inner profile of the at least two openings (9, 9') is formed in the receiving device (3) to be complementary to an outer contour of the mounting bracket (8).

3. Holding device according to claim 1 or 2, **characterised in that** the mounting bracket (8) is constructed in the form of a peaked-cap visor and in addition has a conical form so that the support device (4) self-aligns when the mounting bracket (8) is inserted into the associated passage opening (9, 9').

4. Holding device according to any one of claims 1 to 3, **characterised in that** at least one locking device, for example a clip element, by way of which the receiving device (3) and thus the holding device (2) is lockable in the drinks machine, is provided at the receiving device (3).

5. Holding device according to any one of claims 1 to 4, **characterised in that** the receiving device (3) and/or the support device (4) is or are constructed from metal and/or plastics material.

6. Holding device according to any one of claims 1 to 5, **characterised in that** the catch device (7) has a cup-shape.

7. Holding device according to any one of claims 1 to 6, **characterised in that** the holding device (2) is of dishwasher-proof construction.

8. Coffee machine (1) or drinks machine with a removable holding device (2) according to any one of claims 1 to 7, wherein the coffee machine or drinks machine has a recess which is formed to be complementary to the holding device (2) and into which different holding devices (2) are alternatively insertable.

## Revendications

1. Dispositif de maintien (2) d'un récipient pour boisson dans un distributeur automatique de boissons, en particulier dans une cafetière électrique (1), comprenant un dispositif de réception (3) en position essentiellement verticale en forme de demi-cocon et un moyen de support (4) de forme complémentaire, doté d'une surface de pose (5) laissant passer le liquide au moins par endroits et d'un dispositif collecteur (7) placé en dessous, sur lequel le récipient pour boisson peut être déposé, ledit moyen de support (4) pouvant être bloqué dans le dispositif de réception (3) à au moins deux hauteurs différentes, **caractérisé en ce qu'**une console de maintien (8) est disposée sur la surface de pose (5) ou sur le dispositif collecteur (7), laquelle peut être emboîtée, alternativement, dans au moins deux ouvertures (9, 9') distantes l'une de l'autre, prévues sur le dispositif de réception (3).

2. Dispositif de maintien selon la revendication 1, **caractérisé en ce que** la forme d'un contour intérieur desdites au moins deux ouvertures (9, 9') ménagées dans le dispositif de réception (3) est complémentaire à celle d'un contour extérieur de la console de maintien (8).

3. Dispositif de maintien selon la revendication 1 ou 2, **caractérisé en ce que** la console de maintien (8) est réalisée à la manière d'une visière de casquette et a en outre une forme conique, de telle sorte que le moyen de support (4) s'ajuste automatiquement en emboîtant la console de maintien (8) dans l'ouverture de passage (9, 9') associée.

4. Dispositif de maintien selon l'une des revendications 1 à 3, **caractérisé en ce qu'**un moyen de blocage est prévu sur le dispositif de réception (3), par exemple un élément formant clip, permettant de bloquer le dispositif de réception (3), et donc le dispositif de maintien (2), dans le distributeur automatique de boisson.

5. Dispositif de maintien selon l'une des revendications 1 à 4, **caractérisé en ce que** le dispositif de réception (3) et/ou le moyen de support (4) sont réalisés en métal et/ou en matière plastique.

6. Dispositif de maintien selon l'une des revendications 1 à 5, **caractérisé en ce que** le dispositif collecteur (7) est en forme de tasse.

7. Dispositif de maintien selon l'une des revendications 1 à 6, **caractérisé en ce que** le dispositif de maintien (2) résiste au lave-vaisselle.

8. Cafetière électrique (1) ou distributeur automatique de boissons comprenant un dispositif de maintien (2) amovible selon l'une des revendications 1 à 7, la cafetière électrique ou le distributeur automatique de boissons comportant un creux dont la forme est complémentaire à celle du dispositif de maintien (2) et dans lequel peuvent être placés, alternativement, des dispositifs de maintien (2) différents.
